# EUROPEAN PATENT SPECIFICATION

(11) **EP 4 558 798 B1**
(45) Date of publication and mention of the grant of the patent: **29.04.2026**
(21) Application number: 23745406.1
(22) Date of filing: 19.07.2023
(51) Int. Cl.: C09D 11/322, G01K 1/143, C09D 11/30, C09D 11/52, H05K 3/12, G01L 1/00, G03F 7/00, G01K 7/18

(54) **INKJET-PRINTED SENSOR**
TINTENSTRAHLBEDRUCKTER SENSOR
CAPTEUR PAR IMPRESSION À JET D'ENCRE

(30) Priority: 19.07.2022 LU 502522
(43) Date of publication of application: 28.05.2025
(73) Proprietor: LUXEMBOURG INSTITUTE OF SCIENCE AND TECHNOLOGY (LIST), 4362 Esch-sur-Alzette (LU)
(72) Inventor: GLINSEK, Sebastjan, 4362 Esch-sur-Alzette (LU); GIROD, Stéphanie, 4362 Esch-sur-Alzette (LU); DEFAY, Emmanuel, 4362 Esch-sur-Alzette (LU)
(74) Representative: Ipsilon Luxembourg
(86) International application number: PCT/EP2023/025340
(87) International publication number: WO 2024/017505

(56) References cited:
- EP-A1- 3 633 338
- US-A1- 2020 092 998
- ZHANG ZHIYI ET AL: "Printed flexible capacitive humidity sensors for field application", SENSORS AND ACTUATORS B: CHEMICAL, ELSEVIER BV, NL, vol. 359, 9 March 2022 (2022-03-09), XP086991990, ISSN: 0925-4005, [retrieved on 20220309], DOI: 10.1016/J.SNB.2022.131620
- SHAH MUHAMMAD ALI ET AL: "Classifications and Applications of Inkjet Printing Technology: A Review", IEEE ACCESS, IEEE, USA, vol. 9, 8 October 2021 (2021-10-08), pages 140079 - 140102, XP011884167, DOI: 10.1109/ACCESS.2021.3119219
- RAMIREZ JHONATTAN C. ET AL: "Dielectric barrier discharge plasma treatment of modified SU-8 for biosensing applications", vol. 9, no. 5, 9 April 2018 (2018-04-09), United States, pages 2168, XP093022266, ISSN: 2156-7085, Retrieved from the Internet <URL:https://www.researchgate.net/profile/Jhonattan-Cordoba/publication/324376596_Dielectric_barrier_discharge_plasma_treatment_of_modified_SU-8_for_biosensing_applications/links/5aee58930f7e9b01d3e188ca/Dielectric-barrier-discharge-plasma-treatment-of-modified-SU-8-for-biosensing-applications.pdf> DOI: 10.1364/BOE.9.002168
- ZHANG J. ET AL: "Characterization of the polymerization of SU-8 photoresist and its applications in micro-electro-mechanical systems (MEMS)", POLYMER TESTING, vol. 20, no. 6, 1 January 2001 (2001-01-01), AMSTERDAM, NL, pages 693 - 701, XP093022267, ISSN: 0142-9418, DOI: 10.1016/S0142-9418(01)00005-8

## Description

### Technical field

The invention is directed to the field of strain and thermal sensors and more specifically to their design and manufacturing process.

### Background art

Thin-film resistance temperature detectors (RTDs) are generally manufactured by etching a layer of metallic material to obtain a given pattern. The pattern is then attached (glued) to an object of interest, of which the temperature or strain condition is to be monitored. Electric wires are then soldered to the pattern.

US 2020/092998 A1 discloses e.g. a thin-film RTD comprising an etched silver pattern on a substrate.

This manufacturing process is cumbersome and slow and the reliability of the measured values depends on the quality of the glue and the quality of the gluing operation. The quality of the gluing operation depends on several factors, including the operator's way of applying the glue and the sensor (prone to human error), or the surface roughness: objects with a high surface roughness can lead to a better adherence with glue.

Also, mainstream strain or thermal sensors may sometimes not withstand a wide range of temperature and may crack or present some non-consistent results over a range of for instance -100°C to 100°C, due to the glue and/or to the technology of the sensor. This means that those sensors are not suitable for measuring a strain or a temperature in space or on some celestial bodies.

There is therefore a need to provide a manufacturing method that is cost efficient and that enables to obtain a sensor that will be reliable in spatial condition and that will be versatile to provide reliable results irrespective of the surface roughness of the object of interest to be measured.

### Summary of invention

### Technical Problem

The invention has for technical problem to provide a reliable strain sensor or a thermal sensor, as well as an efficient manufacturing method therefor, to obtain reliable results within a wide range of temperature and irrespective of the surface roughness of the objects to be monitored.

### Technical solution

The invention is directed to a strain sensor or a thermal sensor according to claim 1.

The inventors have shown that using SU-8 as insulation layer provides many benefits: it can compensate the surface roughness of the substrate to offer a smooth support for the pattern of silver material; a thick layer of SU-8 can be inkjet-printed efficiently; and the resulting sensor can reliably withstand a wide range of temperatures.

The pattern of silver material may be inkjet-printed over the SU-8 insulation layer, once the layer has solidified (cured).

The silver pattern may have two terminal ends between which a resistance is measured to evaluate the strain or the temperature. A Wheatstone bridge can electrically connect these two ends.

Alternatively, the pattern may be formed of two (or more) interdigitated electrodes (comb-like patterns) and the stress or temperature will be evaluated by measuring a capacitance between the electrodes.

Additionally, using SU-8 as encapsulation layer protects the silver pattern and enables the sensor to remain reliable over a wide range of temperature.

The fact that the various elements are inkjet-printed is visible and detectable. For instance, a cross-section of an inkjet-printed element (SU-8 layer here) can have an excess of thickness at both lateral ends. Also, the inkjet-printed silver pattern shows smaller grain structure. Additionally, an inkjet-printed product does not contain any residue of etching agents (residues of chemical agents in the final product). Finally, the size or shape of the pattern of a sensor can reveal that it could not have been made by an etching technique.

According to the invention, the sensor comprises electric conductors attached to SU-8 anchors and in electric contact with the linear pattern. A further benefit of using inkjet printing is indeed that the various materials are deposited in a malleable form and thus, electric conductors can be anchored in a malleable block of SU-8 before its solidification. This way of anchoring the conductors is efficient and reliable: it avoids the need for a manual operation of soldering the wires to the pattern while holding the wires.

According to an advantageous embodiment, the insulation layer has a surface opposite the substrate that has an RMS roughness in the range of a few nanometres. The insulation layer can have this smoothness irrespective of the surface roughness of the substrate. This implies that the insulation layer is thick enough to compensate for the surface roughness of the substrate.

According to an advantageous embodiment, the insulation layer has a thickness of about 20 microns.

The invention also relates to a method for forming a strain sensor or a thermal sensor for measuring a strain or a temperature of an object of interest according to claim 4.

Alternatively, and not forming part of the invention, the layers can be printed on a substrate that is then fixed to the object of interest.

According to the invention, after having inkjet-printed the linear pattern and before inkjet-printing the encapsulation layer, the following steps are carried out, in that order: inkjet-printing two anchors of SU-8; housing a respective electric conductor in each anchor; polymerizing the SU-8 anchors; and inkjet-printing silver material to electrically connect the electric conductors to the linear pattern.

According to an advantageous embodiment, the insulation layer is obtained by successively inkjet-printing 5 layers of a thickness of about 4 microns.

### Brief description of the drawings

Figure 1 illustrates a sensor of the invention;
Figure 2 shows the method for anchoring the electric conductors.

### Description of an embodiment

The following examples and drawings are given for illustration purposes only. The invention is not limited by these examples but only by the appended claims. The various parts of the sensor can have various dimensions or be embodied in various ways. Each variant of each component/step of the sensor/method may be combined with each variant of any other component/step of the sensor/method, unless explicitly mentioned otherwise.

The drawings are schematic and not drawn to scale. For example, the thickness of the various elements is not drawn to scale to facilitate the understanding of the drawings.

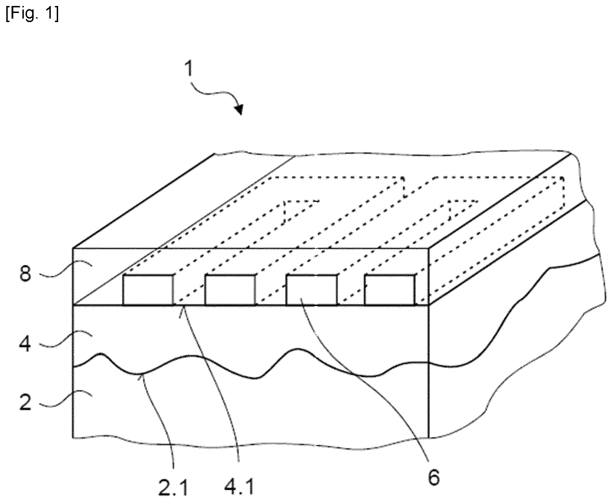

Figure 1 shows an isometric partial view of a sensor 1 according to the invention. The sensor 1 is made of several components that are inkjet-printed on a substrate 2. The substrate 2 is a portion of an object of interest, whose temperature or strain condition is monitored. In an alternative embodiment, the substrate 2 does not form part of the object of interest but is glued or attached to an object of interest.

As an example, the substrate 2 may be an object made of aluminum. The skilled person will understand that any other material or alloy can serve as a substrate, including but not limited to metals, plastics, composite materials, organic materials, etc.

The substrate 2 has a surface 2.1 which may have a surface roughness of for instance 0.1 micron RMS or greater.

The thickness of the substrate 2 can be of several millimeters.

An insulation layer 4 made of SU-8 is inkjet-printed over the substrate 2. The insulation layer 4 has a surface 4.1 opposite the substrate 2 that is smoother than the surface 2.1. The process of inkjet-printing enables the smoothness of the surface 4.1 to be of a few nanometers RMS, irrespective of the surface roughness of the surface 2.1 (hence, surface 4.1 is thousands of times smoother than surface 2.1). The insulation layer 4 has a thickness that is sufficient to compensate for the poor smoothness of the substrate. The thickness may be of about 20 microns.

The insulation layer 4 may be inkjet-printed, and then dried (for instance at 95°C), then exposed to UV (for a duration sufficient to polymerize, for instance for about 200 seconds with an average-power UV lamp), baked (at 95°C) and finally hard baked (at a temperature between 150 and 250°C). That last temperature can be reached with a ramp of about 450°C/h.

If the substrate 2 is not made of electrically conductive material, the insulation layer 4 does not have the role of electrical insulator but the present application will nevertheless use the wording "insulation layer".

On the surface 4.1 of the insulation layer 4 can be deposited a pattern 6 of silver material. The pattern can be deposited by inkjet printing silver on the insulation layer 4, once it is hardened. The pattern 6 is illustrated here as a crenel-like linear pattern but the skilled person would understand that various strain gauge / thermal sensor patterns are adapted to various use. The use of inkjet-printing enables to obtain a wide variety of shapes of patterns. The overall pattern can be of a few mm wide and each linear segment of the pattern may have a width in the order of magnitude of tens of microns to several hundreds of microns. The size of the pattern can therefore be very small. Therefore, by depositing the pattern by inkjet-printing, some design constraints (shape or size of the pattern on an available portion of the piece that is monitored) are no longer an issue.

The pattern of silver material can be inkjet-printed and then annealed at a temperature comprised between 150°C and 250°C, preferably around 200°C.

Although silver is beneficial for being easily inkjet-printable, other metallic conducting materials could be used, insofar as they are inkjet-printable, potentially under controlled temperature and/or pressure condition, e.g., copper, gold, platinum, etc., and their alloys, as well as carbon nanotubes or graphene.

The silver pattern 6 is mainly embedded in an encapsulating layer 8 made of inkjet-printed SU-8. The encapsulating layer 8 has a thickness that is sufficient to cover the silver pattern 6, for instance 4 to 100 microns.

After deposition, the encapsulating layer 8 can be dried, exposed to UV, baked and hard baked, potentially at lower temperatures than the insulation layer to avoid altering the silver pattern 6.

In an embodiment that is not shown, two terminals of the pattern 6 may protrude outside of the encapsulating layer to connect the terminals to electric conductors, for instance by using conductive Ag epoxy, or by using soldering.

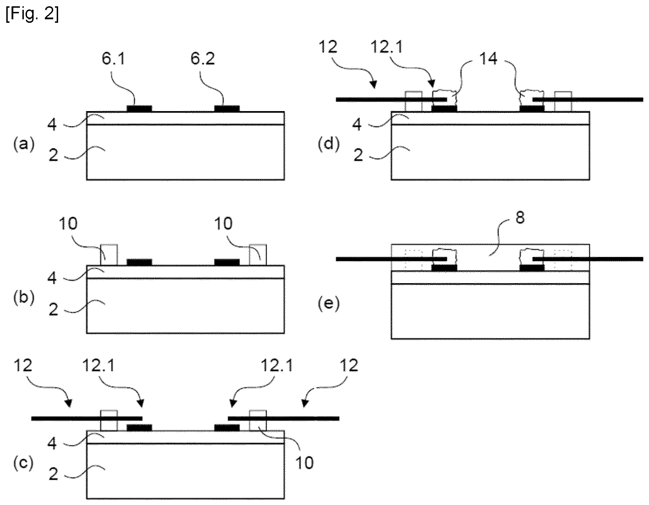

Alternatively, figure 2 shows an advantageous method to connect electric conductors to the pattern 6.

Figure 2 (a) shows the substrate 2 where the insulation layer 4 and the pattern 6 have already been inkjet-printed. Only two terminals 6.1 and 6.2 of the pattern 6 are visible here. The terminals are the two ends of the linear pattern. Seen from above, they are substantially bigger than the linear pattern and are aimed to be connected to electric conductors. The pattern can comprise more than two terminals, potentially constituting the ends of several independent sub-patterns.

In a subsequent step, illustrated as (b), two blocks 10 of SU-8 material are inkjet-printed in the vicinity of the terminals. These blocks 10 will serve as anchors for the electric conductors.

In step (c), a respective electric conductor 12 (e.g., copper cable) is brought into each of the anchors 10. Since the anchors 10 are not yet hard, the conductors 12 can penetrate into the anchors 10. The conductors 12 are positioned in such a way that they protrude outside of the anchors 10 and near to the terminals, for instance by having an end 12.1 that extends over the terminals.

The anchors are then polymerized to rigidly maintain the conductors 12 in a fixed position.

In step (d), once the conductors 12 are fixed in position, an amount of silver material 14 is inkjet-printed over the conductors' ends 12.1 and the terminals 6.1, 6.2, to establish an electric connection between the pattern 6 and the conductors 12.

Finally, in step (e), after the junction material 14 has solidified, the encapsulating layer 8 is inkjet-printed. The encapsulating layer 8 can be thicker or of equivalent thickness than the anchors 10.

This enables any mechanical stress to be withheld by the anchors 10 rather than by the junction 14. It is also an advantageous use of the inkjet-printing technique that is already used for other steps of the method (hence potentially in the same machine).

The tests have shown that the sensor of the invention is reliable over the range -70°C;90°C, with a gauge factor of 1.57.

The exemplary embodiments presented above and the various quantities and numbers are given to illustrate the invention. The person skilled in the art would understand that the scope of the invention is only limited by the appended claims and that variations in the temperatures or the time duration for the various steps of the method do not depart from the scope of the present invention as defined by the appended claims.

Although the deposition processes are discussed in relation to inkjet printing, the skilled person would understand that some benefits of the invention may also apply to other deposition techniques where the material is deposited while being malleable (e.g., spin-coating, etc.).

## Claims

1. Strain sensor or thermal sensor (1) comprising:
- a substrate (2);
- an insulation layer (4) of SU-8, on the substrate (2);
- a linear pattern (6) of silver material, on the insulation layer (4); and
- an encapsulation layer (8) which covers the linear pattern (6);
**characterized in that**
the encapsulation layer (8) is of SU-8; and
the sensor comprises SU-8 anchors (10) and electric conductors (12) attached to said SU-8 anchors (10) and in electric contact with the linear pattern (6).

2. Sensor (1) according to claim 1, **characterized in that** the insulation layer (4) has a surface (4.1) opposite the substrate (2) that has an RMS roughness in the range of a few nanometres.

3. Sensor (1) according to one of claims 1 to 2, **characterized in that** the insulation layer (4) has a thickness of about 20 microns.

4. Method for forming a strain sensor (1) or a thermal sensor (1) for measuring a strain or a temperature of an object of interest (2), the method comprising:
- inkjet printing an insulation layer (4) of SU-8 on a portion of the object of interest (2);
- inkjet printing a linear pattern (6) of silver material on the insulation layer (4) of SU-8;
- inkjet-printing two anchors (10) of SU-8;
- housing a respective electric conductor (12) in each anchor (10);
- polymerizing the SU-8 anchors (10);
- inkjet-printing silver material (14) to electrically connect the electric conductors (12) to the linear pattern (6); and
- inkjet printing an encapsulating layer (8) of SU-8 covering the linear pattern (6).

5. Method according to claim 4, **characterized in that** the insulation layer (4) is obtained by successively inkjet-printing 5 layers of a thickness of about 4 microns.

## Patentansprüche

1. Dehnungs- oder Temperatursensor (1), umfassend:
- ein Substrat (2);
- eine Isolationsschicht (4) aus SU-8, auf dem Substrat (2);
- ein Linearmuster (6) aus Silbermaterial, auf der Isolationsschicht (4); und
- eine Verkapselungsschicht (8), welche das Linearmuster (6) bedeckt;
**dadurch gekennzeichnet, dass**
die Verkapselungsschicht (8) aus SU-8 besteht; und
der Sensor SU-8 Anker (10) und elektrische Leiter (12) umfasst, die an den SU-8 Ankern (10) befestigt und elektrisch mit dem Linearmuster (6) verbunden sind.

2. Sensor (1) nach Anspruch 1, **dadurch gekennzeichnet, dass** die Isolationsschicht (4) eine Oberfläche (4.1) gegenüber dem Substrat (2) hat, die eine RMS-Rauheit im Bereich von wenigen Nanometern aufweist.

3. Sensor (1) nach einem der Ansprüche 1 bis 2, **dadurch gekennzeichnet, dass** die Isolationsschicht (4) eine Dicke von etwa 20 Mikrometern aufweist.

4. Verfahren zur Herstellung eines Dehnungssensors (1) oder eines Temperatursensors (1) zur Messung einer Dehnung oder einer Temperatur eines Objekts von Interesse (2), umfassend:
- Tintenstrahldrucken einer Isolationsschicht (4) aus SU-8 auf einen Teil des Objekts von Interesse (2);
- Tintenstrahldrucken eines Linearmusters (6) aus Silbermaterial auf die Isolationsschicht (4) aus SU-8;
- Tintenstrahldrucken von zwei Ankern (10) aus SU-8;
- Einsetzen eines jeweiligen elektrischen Leiters (12) in jeden Anker (10);
- Polymerisieren der SU-8 Anker (10);
- Tintenstrahldrucken von Silbermaterial (14) um die elektrischen Leiter (12) elektrisch mit dem Linearmuster (6) zu verbinden; und
- Tintenstrahldrucken einer Verkapselungsschicht (8) aus SU-8, die das Linearmuster (6) bedeckt.

5. Verfahren nach Anspruch 4, **dadurch gekennzeichnet, dass** die Isolationsschicht (4) durch aufeinanderfolgendes Tintenstrahldrucken von 5 Schichten mit einer Dicke von etwa 4 Mikrometern erhalten wird.

## Revendications

1. Capteur de contrainte ou capteur thermique (1) comprenant :
- un substrat (2) ;
- une couche d'isolation (4) de SU-8, sur le substrat (2) ;
- un motif linéaire (6) de matériau argenté, sur la couche d'isolation (4) ; et
- une couche d'encapsulation (8) qui recouvre le motif linéaire (6) ;
**caractérisé en ce que**
la couche d'encapsulation (8) est de SU-8 ; et
le capteur comprend des ancres de SU-8 (10) et des conducteurs électriques (12) attachés auxdites ancres de SU-8 (10) et en contact électrique avec le motif linéaire (6).

2. Capteur (1) selon la revendication 1, **caractérisé en ce que** la couche d'isolation (4) a une surface (4.1) opposée au substrat (2) présentant une rugosité RMS de l'ordre de quelques nanomètres.

3. Capteur (1) selon une des revendications 1 à 2, **caractérisé en ce que** la couche d'isolation (4) a une épaisseur d'environ 20 microns.

4. Procédé de fabrication d'un capteur de contrainte (1) ou d'un capteur thermique (1) pour mesurer une contrainte ou une température d'un objet d'intérêt (2), le procédé comprenant :
- l'impression par jet d'encre d'une couche d'isolation (4) de SU-8 sur une partie de l'objet d'intérêt (2) ;
- l'impression par jet d'encre d'un motif linéaire (6) de matériau argenté sur la couche d'isolation (4) de SU-8 ;
- l'impression par jet d'encre de deux ancres (10) de SU-8 ;
- le logement d'un conducteur électrique respectif (12) dans chaque ancre (10) ;
- la polymérisation des ancres de SU-8 (10) ;
- l'impression par jet d'encre de matériau argenté (14) pour connecter électriquement les conducteurs électriques (12) au motif linéaire (6) ; et
- l'impression par jet d'encre d'une couche d'encapsulation (8) de SU-8 recouvrant le motif linéaire (6).

5. Procédé selon la revendication 4, **caractérisé en ce que** la couche d'isolation (4) est obtenue en imprimant successivement par jet d'encre 5 couches d'une épaisseur d'environ 4 microns.
